# EUROPÄISCHE PATENTSCHRIFT

(11) **EP 2 024 204 B1**
(45) Veröffentlichungstag und Bekanntmachung des Hinweises auf die Patenterteilung: **14.07.2010**
(21) Anmeldenummer: 07725683.2
(22) Anmeldetag: 30.05.2007
(51) Int. Cl.: B60T 1/10

(54) **ANTRIEB MIT ENERGIESPEICHEREINRICHTUNG UND VERFAHREN ZUM SPEICHERN VON KINETISCHER ENERGIE**
DRIVE WITH AN ENERGY STORE DEVICE AND METHOD FOR STORING KINETIC ENERGY
SYSTÈME D'ENTRAÎNEMENT MUNI D'UN DISPOSITIF D'ACCUMULATION D'ÉNERGIE ET PROCÉDÉ POUR ACCUMULER DE L'ÉNERGIE CINÉTIQUE

(30) Priorität: 02.06.2006 DE 102006025982; 08.09.2006 DE 102006042390
(43) Veröffentlichungstag der Anmeldung: 18.02.2009
(73) Patentinhaber: Brueninghaus Hydromatik GmbH, 89275 Elchingen (DE)
(72) Erfinder: RATHKE, Rolf, 89073 Ulm (DE); EHRET, Christine, 89275 Elchingen (DE); BEHM, Martin, 89073 Ulm (DE); MÜLLER, Matthias, 86356 Neusäss (DE)
(74) Vertreter: Beder, Jens
(86) Internationale Anmeldenummer: PCT/EP2007/004794
(87) Internationale Veröffentlichungsnummer: WO 2007/140914

(56) Entgegenhaltungen:
- DE-A- 2 448 723
- DE-A- 3 247 289
- DE-A- 3 247 335
- DE-A- 4 333 564
- DE-B- 1 907 748

## Beschreibung

Die Erfindung betrifft einen Antrieb mit einer Energiespeichereinrichtung und ein Verfahren zum Speichern von kinetischer Energie.

Es ist z. B. aus der US 6,712,166 B2 bekannt, zum Speichern von kinetischer Energie bei Fahrzeugen mit intensiven Fahrzyklen, also häufigem Abbremsen und anschließendem Wiederbeschleunigen, kinetische Energie in Form von Druckenergie zu speichern. Hierzu wird eine Hydropumpe an einen Fahrantrieb gekoppelt. Die Hydropumpe fördert Druckmittel in einen Druckspeicher, indem sie während eines Bremsvorgangs als Pumpe betrieben wird. Umgekehrt kann durch die Hydropumpe, die auch als Hydromotor betrieben werden kann, die Druckenergie zurückgewonnen werden, indem der Druckspeicher über die Hydropumpe entspannt wird. Bei der aus der US 6,712,166 B2 bekannten Anordnung wird hierbei ein Stromregelventil verwendet, um den Bremsdruck konstant zu halten.

Die beschriebene Anordnung hat daher den Nachteil, dass eine Beeinflussung der Bremsleistung bei der Bremsenergierückgewinnung nicht erfolgt. Wird beispielsweise ein höheres Bremsmoment gefordert, so muss zusätzlich zu der Aufladung des Druckspeichers kinetische Energie abgebaut werden, indem eine Reibungsbremse durch den Fahrzeugführer aktiviert wird.

Die Druckschrift DE 32 47 335 A1 zeigt ein Antriebsaggregat, vorzugsweise für Fahrzeuge, mit einer Primärenergiequelle, vorzugsweise einer Brennkraftmaschine, in die im Bremszustand eine sogenannte Schleppleistung einspeisbar ist, und mit einem vorzugsweise einstellbaren Getriebe und mit einer mit der Primärenergiequelle verbundenen Zusatzpumpe, wobei in der Förderleitung der Zusatzpumpe eine zuschaltbare Drosselstelle angeordnet ist, damit in dem Zustand, in dem über das Getriebe an die Primärenergiequelle Bremsleistung zurückfließen soll, die Leistungsaufnahme erhöht wird, indem die Zusatzpumpe gegen den Widerstand der Drosselstelle fördert.

Der Erfindung liegt daher die Aufgabe zugrunde, eine variable Bremsleistung durch das System zur Bremsenergierückgewinnung zu ermöglichen und ein entsprechendes Verfahren zu schaffen.

Die Aufgabe wird durch den erfindungsgemäßen Antrieb mit den Merkmalen des Anspruchs 1 und das Verfahren nach Anspruch 7 gelöst.

Bei dem Antrieb mit den Merkmalen des Anspruchs 1 bzw. dem Verfahren nach Anspruch 7 ist zusätzlich zu der hydrostatischen Kolbenmaschine und dem damit verbundenen Speicherelement eine einstellbare Drosselstelle vorgesehen. Mit Hilfe der einstellbaren Drosselstelle ist ein Druckabfall in der mit der Kolbenmaschine verbundenen Förderleitung einstellbar. Somit wird der Druck, gegen den die hydrostatische Kolbenmaschine während des Bremsvorgangs fördert, eingestellt und damit das verfügbare Bremsmoment.

Etwas genauer umfasst der erfindungsgemäße Antrieb nach Anspruch 1 eine Energiespeichereinrichtung mit einer hydrostatischen Kolbenmaschine und einem damit verbundenen Speicherelement, wobei in einer Hochdruckspeicherleitung zwischen der in Abhängigkeit von einem Bremssignal in ihrem Fördervolumen einstellbaren Kolbenmaschine und dem Speicherelement eine in Abhängigkeit von dem Bremssignal derart einstellbare Drosselstelle angeordnet ist, dass deren Drosselwirkung dem Bremssignal entsprechend angepasst ist. Das Verfahren nach Anspruch 7 verwendet den erfindungsgemäßen Antrieb und umfasst dabei ein Ermitteln eines angeforderten Bremsmoments, ein Einstellen der einstellbaren Drosselstelle in Abhängigkeit von dem angeforderten Bremsmoment, so dass deren Drosselwirkung dem Bremssignal entsprechend angepasst wird, und ein Fördern von Druckmittel in das Speicherelement über die Drosselstelle.

Durch das Einstellen des Fördervolumens der hydrostatischen Kolbenmaschine ist beispielsweise durch Vergrößern der Fördermenge der hydrostatischen Kolbenmaschine die Bremsleistung ebenfalls zu Erhöhen.

In den Unteransprüchen sind vorteilhafte Weiterbildungen des erfindungsgemäßen Antriebs ausgeführt.

Das Bremssignal kann beispielsweise eine Bremskraft oder die Bremspedalstellung sein, die an einem Bremspedal durch den Fahrzeugführer aufgebracht bzw. vorgegeben wird. Insbesondere ist es vorteilhaft, das Fördervolumen und/oder die Drosselung durch die Drosselstelle mit zunehmender Bremspedalkraft bzw. zunehmendem Bremspedalweg zu erhöhen. Der Bremspedalweg ergibt sich aus der Ausgangsstellung des Bremspedals und der vorgegebenen Bremspedalstellung. Die nachfolgenden Ausführungen beziehen sich stellvertretend auf die Bremspedalkraft und treffen in entsprechender Weise auch auf den Bremspedalweg zu.

Besonders vorteilhaft ist es, zunächst bei größer werdender angeforderter Bremsleistung, also einer zunehmenden Bremspedalkraft, die Fördermenge der hydrostatischen Kolbenmaschine in Richtung ihres Fördervolumenmaximums zu verstellen und anschließend bei weiter steigender Bremspedalkraft die Drosselung durch die einstellbare Drosselstelle zu erhöhen.

Bei der Einstellung der Drosselstelle wird vorzugsweise auch der jeweilige Ladezustand des Speicherelements berücksichtigt. Während eines Bremsvorgangs wird Druckmittel durch die hydrostatische Kolbenmaschine in das Speicherelement hineingefördert. Dadurch erhöht sich in dem hydrostatischen Speicherelement der dort herrschende Druck. Infolgedessen erhöht sich bei sonst identischen Bedingungen die Bremsleistung. Diese sich ändernde Bremsleistung kann durch entsprechende Einstellung der einstellbaren Drosselstelle kompensiert werden, da diese den Druck auf der Pumpenseite proportional zum Bremspedalsignal regelt, wenn der volle Pumpenschwenkwinkel erreicht ist. Somit wird beispielsweise bei dem anfänglich geringen Speicherdruck eine größere Drosselung eingestellt und durch einen Druckaufbau stromaufwärts der Drosselstelle eine ausreichende Bremsleistung sichergestellt. Steigt bei weiterer Zuführung von Druckmittel in das Speicherelement die Bremsleistung ohnehin aufgrund des steigenden Gegendrucks, so wird die Drosselstelle mit zunehmendem Speicherdruck zunehmend in Richtung "offen" verstellt.

Ein bevorzugtes Ausführungsbeispiel des erfindungsgemäßen Antriebs mit Bremsenergiespeichereinrichtung ist in der Zeichnung dargestellt und wird nachfolgend erläutert. Es zeigt:

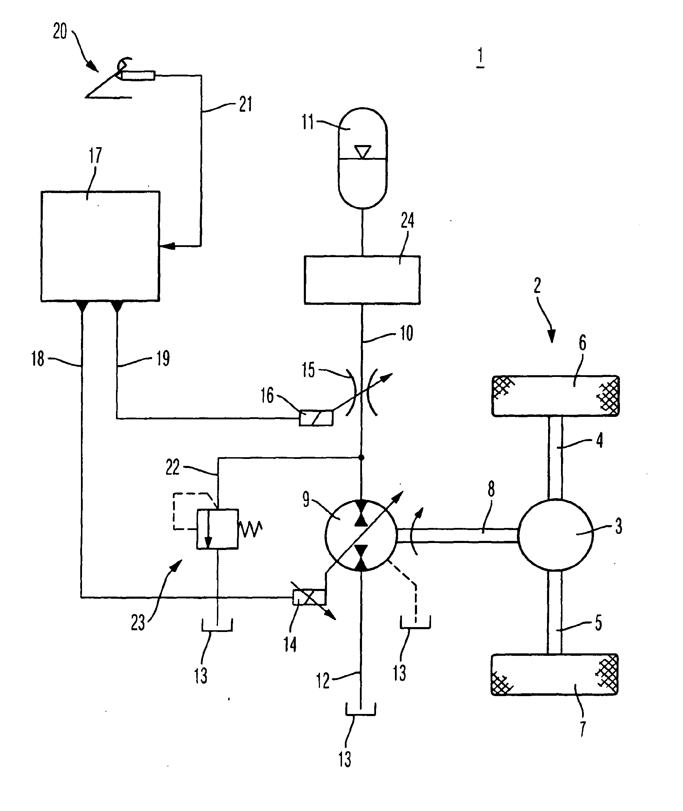

- Fig. 1: eine schematische Darstellung eines erfindungsgemäßen Antriebs mit einer Energiespeichereinrichtung.

In der Fig. 1 ist eine schematische Darstellung eines erfindungsgemäßen Antriebs 1 gezeigt. Der erfindungsgemäße Antrieb 1 dient beispielsweise zum Antreiben einer Antriebsachse 2. Die angetriebene Antriebsachse 2 weist ein Achsdifferential 3 auf, welches über eine erste Halbachse 4 und eine zweite Halbachse 5 auf die angetriebenen Räder 6, 7 des Fahrzeugs wirkt.

Der dargestellte Antrieb 1 ist insbesondere ein Fahrantrieb eines Nutzfahrzeugs mit intensiven Fahrzyklen. Solche intensiven Fahrzyklen, die viele Brems- und anschließende Beschleunigungsvorgänge enthalten, können beispielsweise bei Müllsammelfahrzeugen, Radlader und Staplern auftreten. Um die beim Bremsen freiwerdende kinetische Energie wieder nutzen zu können, weist der Antrieb 1 eine Energiespeichereinrichtung auf. Die Energiespeichereinrichtung ist über eine Kopplungswelle 8 mit der Antriebsachse 2 verbunden. Der Einfachheit halber ist die Kopplungswelle 8 in der Fig. 1 als mit dem Hinterachsdifferential 3 verbunden dargestellt. Ebenso ist es jedoch möglich, die Kopplungswelle 8 mit einer nicht dargestellten Antriebswelle, beispielsweise einer Kardanwelle, zu verbinden. Als weitere Alternative kann eine hydrostatische Kolbenmaschine 9 der Energiespeichereinrichtung unmittelbar mit einer Kardanwelle eines Antriebs 1 verbunden sein. In dem dargestellten Ausführungsbeispiel ist die hydrostatische Kolbenmaschine 9 über die Kopplungswelle 8 mit dem Hinterachsdifferential 3 verbunden. Somit wird die hydrostatische Kolbenmaschine 9 mit einer von der Geschwindigkeit des Fahrzeugs abhängigen Drehzahl angetrieben. Die hydrostatische Kolbenmaschine 9 ist in ihrem Fördervolumen verstellbar ausgeführt und zur Förderung von Druckmittel in zwei Richtungen vorgesehen.

Über eine Hochdruckspeicherleitung 10 ist die hydrostatische Kolbenmaschine 9 mit einem hydraulischen Speicherelement 11 verbunden. Das Speicherelement 11 ist vorzugsweise als Hochdruckspeicher ausgeführt und beispielsweise in Form eines Hydromembranspeichers realisiert.

Während eines Bremsvorgangs, bei dem aufgrund der Massenträgheit das Fahrzeug über das Hinterachsdifferential 3 und die Kopplungswelle 8 die hydrostatische Kolbenmaschine 9 antreibt, wird Druckmittel über die Förderleitung 10 in das Speicherelement 11 gefördert. Die hydrostatische Kolbenmaschine 9 saugt hierzu Druckmittel über eine Saugleitung 12 aus einem Tankvolumen 13 an und fördert es unter Erhöhung des Drucks in das Speicherelement. Damit wird freiwerdende kinetische Energie in Form von Druckenergie gespeichert.

In einer alternativen Ausführungsform kann anstelle des Tankvolumens 13 ein zweites Speicherelement vorgesehen werden, welches als Niederdruckspeicher ausgeführt ist. Die Verwendung eines zweiten Speicherelements in Form eines Niederdruckspeichers hat den Vorteil, dass auf der Saugseite der hydrostatischen Kolbenmaschine 9 im Bremsbetrieb jeweils ein definierter Eingangsdruck vorliegt. Damit wird dem Auftreten von Kavitation auf der Saugseite der hydrostatischen Kolbenmaschine 9 vorgebeugt.

Die hydrostatische Kolbenmaschine 9 ist in ihrem Fördervolumen einstellbar. Ihr Verstellmechanismus wirkt hierzu mit einer Verstellvorrichtung 14 zusammen. Die Verstellvorrichtung 14 ist in dem dargestellten Ausführungsbeispiel der Fig. 1 elektrisch angesteuert, was in der Zeichnung vereinfacht durch einen Proportionalmagneten wiedergegeben ist.

Zwischen dem Speicherelement 11 und der hydrostatischen Kolbenmaschine 9 ist erfindungsgemäß eine einstellbare Drossel 15 angeordnet. Die einstellbare Drossel 15 ist wie die hydrostatische Kolbenmaschine 9 durch eine Drossellstelleinrichtung 16 einstellbar. Damit ist der Strömungswiderstand in der Hochdruckspeicherleitung 10 einstellbar.

Zum Betätigen der Verstellvorrichtung 14 und der Drossellstelleinrichtung 16 dient eine elektronische Steuereinheit 17. Die elektronische Steuereinheit 17 ist über eine erste Signalleitung 18 mit der Verstellvorrichtung 14 und über eine zweite Signalleitung 19 mit der Drosselstelleinrichtung 16 verbunden. Die elektronische Steuereinheit 17 empfängt von einem Bremspedal 20 ein Bremssignal über eine Bremssignalleitung 21. Das Bremssignal kann beispielsweise proportional der an dem Bremspedal ausgeübten Bremspedalkraft sein. Zur Absicherung der Hochdruckspeicherleitung 10 ist ein Druckbegrenzungsventil 23 vorgesehen. Das Druckbegrenzungsventil 23 ist über eine Sicherungsleitung 22 mit der Hochdruckspeicherleitung 10 verbunden. Übersteigt der Druck in der Sicherungsleitung 22 einen vorgegebenen kritischen Grenzwert, so öffnet das Druckbegrenzungsventil 23 und entspannt die Hochdruckspeicherleitung 10 in ein Tankvolumen 13.

Nachfolgend wird das Verfahren zum Speichern von Bremsenergie und die anschließende Rückgewinnung in einer bevorzugten Ausführungsform beschrieben.

Ein mit einer bestimmten Geschwindigkeit fahrendes Fahrzeug hat eine der Geschwindigkeit und Fahrzeugmasse entsprechende kinetische Energie. Wird das Fahrzeug verzögert, so wird diese kinetische Energie abgebaut. Bei dem erfindungsgemäßen Antrieb mit einer Energiespeichereinrichtung wird, wie dies vorstehend bereits erläutert wurde, über die Kopplungswelle 8 die hydrostatische Kolbenmaschine 9 in Rotation versetzt. In Abhängigkeit von der Bremspedalkraft an dem Bremspedal 20 erhält die elektronische Steuereinheit 17 ein Bremssignal über die Bremssignalleitung 21. Aufgrund der Bremspedalkraft wird ein bestimmtes angefordertes Bremsmoment ermittelt. Entsprechend einem zunehmenden angeforderten Bremsmoment wird die hydrostatische Kolbenmaschine 9 in Richtung größeren Fördervolumens verstellt.

Hierzu wird von der elektronischen Steuereinheit 17 über die erste Signalleitung 18 ein Stellsignal an die Verstellvorrichtung 14 übermittelt. Mit zunehmender Bremspedalkraft 20 wird die hydrostatische Kolbenmaschine 9 in Richtung größerwerdenden Fördervolumens verstellt. Überschreitet das angeforderte Bremsmoment, also die an dem Bremspedal 20 erzeugte Bremspedalkraft einen Wert, der das maximale Fördervolumen der hydrostatischen Kolbenmaschine 9 erfordert, so wird zur weiteren Erhöhung des Bremsmomentes bzw. der Bremsleistung die einstellbare Drossel 15 in Richtung größerer Drosselwirkung verstellt. Hierzu wird durch die elektronische Steuereinheit 17 über die zweite Signalleitung 19 der Drosselstelleinrichtung 16 ein entsprechendes Stellsignal übermittelt.

Zur Zuordnung der Einstellwerte für das Fördervolumen bzw. die Drosselung der einstellbaren Drossel 15 sind beispielsweise in der elektronischen Steuereinheit 17 Tabellen abgelegt, so dass die erforderlichen Signalwerte aufgrund des ankommenden Bremssignals abgelesen werden können.

Als weiterer Einflussparameter dient der in dem Speicherelement 11 herrschende Speicherdruck. Ist in dem Speicherelement 11 beispielsweise aufgrund eines vorangegangenen Bremsvorgangs bereits ein hoher Druck vorhanden, so wird das Stellsignal, das durch die elektronische Steuereinheit 17 an die Drosselstelleinrichtung 16 übermittelt wird, um einen entsprechenden Wert verringert. Infolgedessen ist beispielsweise für eine bestimmte angeforderte Bremsleistung die eingestellte Drosselung geringer, wenn das Speicherelement 11 bereits gefüllt ist und somit einen erhöhten Druck aufweist als bei vollständig entleertem Speicherelement 11. Durch die angepasste Verstellung der einstellbaren Drossel 15 wird eine Gesamtbremsleistung eingestellt, welche bevorzugt proportional zu der aufgebrachten Bremspedalkraft an dem Bremspedal 20 ist. Dies hat den Vorteil, dass durch die so erzeugte Bremswirkung das Fahrzeug in einer für den Fahrzeugführer dosierbaren Weise verzögert wird.

Zur weiteren Absicherung des Systems und insbesondere des Speicherelements 11 ist ein Sicherungsblock 24 in der Hochdruckspeicherleitung 10 angeordnet. Dieser Sicherungsblock 24 kann beispielsweise ein weiteres, nicht dargestelltes Druckbegrenzungsventil aufweisen, welches auf einen in dem Speicherelement 11 herrschenden Druck anspricht. Somit lässt sich für einen Abschnitt der Hochdruckspeicherleitung 10 zwischen der hydrostatischen Kolbenmaschine 9 und der einstellbaren Drossel 15 wirkenden Druck ein erster Grenzwert durch das Druckbegrenzungsventil 23 einstellen und für den Abschnitt der Hochdruckspeicherleitung 10 zu dem Speicherelement 11 hin ein zweiter Grenzwert durch den Sicherungsblock 24. Zudem kann der Sicherungsblock 24 vorzugsweise ein Sperrventil zur Unterbrechung der Hochdruckspeicherleitung 10 enthalten. Wird beispielsweise bei gefülltem Speicherelement 11 aufgrund einer konstanten Transportfahrt die gespeicherte Energie momentan nicht zurückgewonnen, so werden Druckverluste auf Grund von Leckage durch ein solches Sperrventil wirksam vermieden.

Zur Rückgewinnung von gespeicherter Energie wird das Druckmittel aus dem Speicherelement 11 entnommen und bei vollständig geöffneter einstellbarer Drossel 15 der hydrostatischen Kolbenmaschine 9 zugeführt. In diesem Fall wirkt die hydrostatische Kolbenmaschine 9 als Hydromotor. Das unter hohem Druck in dem Speicherelement 11 stehende Druckmittel wird über die hydrostatische Kolbenmaschine 9 in das Tankvolumen 13 entspannt. Infolgedessen wird durch die hydrostatische Kolbenmaschine 9 ein Drehmoment erzeugt, welches über die Kopplungswelle 8 dem Fahrzeugantrieb zur Verfügung steht.

Über die erste Signalleitung 18 wird der Verstellvorrichtung 14 hierbei ein Stellsignal übermittelt, welches aufgrund der Beschleunigungsanforderung durch die elektronische Steuereinheit 17 ermittelt wird.

In dem dargestellten Ausführungsbeispiel wird die Energiespeicherung mit Hilfe eines separaten Energiespeichersystems realisiert. Es ist jedoch ebenso möglich, beispielsweise bei einem hydrostatischen Fahrantrieb das System in den hydraulischen Kreislauf und insbesondere auch in einen geschlossenen hydraulischen Kreislauf zu integrieren. Durch die zusätzliche einstellbare Drossel 15, durch die der Gegendruck für die hydrostatische Kolbenmaschine 9 erfindungsgemäß erhöht werden kann, ist es möglich, beispielsweise kleinere Verdrängungseinheiten in der Energiespeichereinrichtung zu verwenden. Das Bremsmoment wird durch Erhöhen des Gegendrucks angepasst. Somit kann ein höheres Bremsmoment aufgebracht werden, als dies der in dem Speicherelement 11 herrschende Druck in Verbindung mit dem maximalen Fördervolumen der hydrostatischen Kolbenmaschine 9 zuließe. Darüberhinaus wird auch eine Fahrzeugbremse, die mittels Reibung das Fahrzeug abbremst, entlastet. Die Entlastung ist eine Folge der höheren maximal verfügbaren Bremskraft durch die Energiespeichereinrichtung.

## Patentansprüche

1. Antrieb mit Energiespeichereinrichtung mit einer hydrostatischen Kolbenmaschine (9) und einem damit verbundenen Speicherelement (11),
**dadurch gekennzeichnet,**
**dass** in einer Hochdruckspeicherleitung (10) zwischen der in Abhängigkeit von einem Bremssignal in ihrem Fördervolumen einstellbaren Kolbenmaschine (9) und dem Speicherelement (11) eine in Abhängigkeit von dem Bremssignal derart einstellbare Drosselstelle (15) angeordnet ist, dass deren Drosselwirkung dem Bremssignal entsprechend angepasst ist.

2. Antrieb nach nach Anspruch 1,
**dadurch gekennzeichnet,**
**dass** das Bremssignal proportional zu einer Bremspedalkraft an einem Bremspedal (20) oder einem Bremspedalweg ist.

3. Antrieb nach Anspruch 2,
**dadurch gekennzeichnet,**
**dass** die hydrostatische Kolbenmaschine (9) mit zunehmender Bremspedalkraft bzw. zunehmendem Bremspedalweg in Richtung größer werdenden Verdrängungsvolumens verstellbar ist.

4. Antrieb nach Anspruch 3,
**dadurch gekennzeichnet,**
**dass** bei maximalem Verdrängungsvolumen und weiter steigender Bremspedalkraft bzw. steigendem Bremspedalweg die Drosselstelle (15) auf größer werdende Drosselung verstellbar ist.

5. Antrieb nach einem der Ansprüche 1 bis 4,
**dadurch gekennzeichnet,**
**dass** die Drosselstelle (15) abhängig von einem in dem Speicherelement (11) herrschenden Druck einstellbar ist.

6. Antrieb nach Anspruch 5,
**dadurch gekennzeichnet,**
**dass** die Zunahme des Bremsmoments durch Druckerhöhung in dem Speicherelement (11) durch eine entgegengesetzt wirkende Verstellung der einstellbaren Drosselstelle (15) kompensierbar ist.

7. Verfahren zur Speicherung von kinetischer Energie durch einen Antrieb mit einer in Abhängigkeit von einem Bremssignal in ihrem Fördervolumen einstellbaren hydrostatischen Kolbenmaschine (9), die mit einem Speicherelement (11) über eine Hochdruckspeicherleitung (10) verbunden ist und mit einer in Abhängigkeit von dem Bremssignal einstellbaren Drosselstelle (15) mit folgenden Verfahrensschritten:
- Ermitteln eines angeforderten Bremsmoments,
- Einstellen der einstellbaren Drosselstelle (15) in Abhängigkeit von dem angeforderten Bremsmoment, so dass deren Drosselwirkung dem Bremssignal entsprechend angepasst wird, und
- Fördern von Druckmittel in das Speicherelement (11) über die Drosselstelle (15).

8. Verfahren nach Anspruch 7,
**dadurch gekennzeichnet,**
**dass** zunächst in Abhängigkeit von dem angeforderten Bremsmoment die hydrostatische Kolbenmaschine (9) in ihrem Fördervolumen eingestellt wird.

9. Verfahren nach Anspruch 7 oder 8,
**dadurch gekennzeichnet,**
**dass** das Verdrängungsvolumen der hydrostatischen Kolbenmaschine (9) proportional zu dem angeforderten Bremsmoment eingestellt wird.

10. Verfahren nach einem der Ansprüche 7 bis 9,
**dadurch gekennzeichnet,**
**dass** mit zunehmendem angeforderten Bremsmoment die hydrostatische Kolbenmaschine (9) in Richtung ihres maximalen Verdrängungsvolumens verstellt wird und nach Erreichen des maximalen Verdrängungsvolumens und weiter steigender Bremsmomentanforderung die einstellbare Drosselstelle (15) in Richtung stärkerer Drosselung verstellt wird.

11. Verfahren nach einem der Ansprüche 7 bis 10,
**dadurch gekennzeichnet,**
**dass** die einstellbare Drosselstelle (15) mit zunehmendem in dem Speicherelement (11) herrschenden Druck in Richtung geringerer Drosselung verstellt wird.

12. Verfahren nach Anspruch 11,
**dadurch gekennzeichnet,**
**dass** durch die Verstellung der Drosselstelle (15) in Richtung geringerer Drosselung bei zunehmendem in dem Speicherelement (11) herrschenden Druck die durch die Druckzunahme in dem Speicherelement (11) verursachte Bremsmomenterhöhung gerade kompensiert wird.

## Claims

1. Drive having an energy storage device having a hydrostatic piston engine (9) and a storage element (11) which is connected thereto,
**characterised in that**
there is arranged, in a high-pressure storage line (10) between the piston engine (9) which can be adjusted in terms of its supply volume in accordance with a brake signal and the storage element (11), a throttle location (15) which can be adjusted in accordance with the brake signal in such a manner that the throttle action thereof is adapted accordingly to the brake signal.

2. Drive according to according to claim 1,
**characterised in that**
the brake signal is proportional to a brake pedal force on a brake pedal (20), or a brake pedal path.

3. Drive according to claim 2,
**characterised in that**
the hydrostatic piston engine (9) can be adjusted as the brake pedal force or brake pedal path increases in the direction of an increasing displacement volume.

4. Drive according to claim 3,
**characterised in that,**
with a maximum displacement volume and as the brake pedal force or brake pedal path further increases, the throttle location (15) can be adjusted to an increasing throttle action.

5. Drive according to any one of claims 1 to 4, **characterised in that**
the throttle location (15) can be adjusted in accordance with a pressure in the storage element (11).

6. Drive according to claim 5,
**characterised in that**
the increase of the brake torque owing to pressure increase in the storage element (11) can be compensated for by a counter-adjustment of the adjustable throttle location (15).

7. Method for storing kinetic energy by means of a drive having a hydrostatic piston engine (9) which can be adjusted in terms of its supply volume in accordance with a brake signal and which is connected to a storage element (11) by means of a high-pressure storage line (10), and having a throttle location (15) which can be adjusted in accordance with the brake signal with the following method steps:
- detecting a requested brake torque,
- adjusting the adjustable throttle location (15) in accordance with the requested brake torque so that the throttle action thereof is adapted accordingly to the brake signal,
- conveying pressure medium into the storage element (11) via the throttle location (15).

8. Method according to claim 7,
**characterised in that,**
in accordance with the requested brake torque, the hydrostatic piston engine (9) is first adjusted in terms of the supply volume thereof.

9. Method according to claim 7 or claim 8,
**characterised in that**
the displacement volume of the hydrostatic piston engine (9) is adjusted in a proportional manner relative to the requested brake torque.

10. Method according to any one of claims 7 to 9, **characterised in that,**
as the requested brake torque increases, the hydrostatic piston engine (9) is adjusted in the direction of the maximum displacement volume thereof and, after reaching the maximum displacement volume, and as the requested brake torque further increases, the adjustable throttle location (15) is adjusted in the direction of a greater throttle action.

11. Method according to any one of claims 7 to 10, **characterised in that**
the adjustable throttle location (15) is adjusted in the direction of a lesser throttle action as the pressure in the storage element (11) increases.

12. Method according to claim 11,
**characterised in that,**
owing to the adjustment of the throttle location (15) in the direction of a lesser throttle action as the pressure in the storage element (11) increases, the increase in brake torque brought about by the pressure increase in the storage element (11) is precisely compensated for.

## Revendications

1. Système d'entraînement muni d'un dispositif d'accumulation d'énergie, comportant une machine à piston (9) hydrostatique et un élément d'accumulation (11) relié à celle-ci, **caractérisé en ce que** dans une conduite d'accumulation sous haute pression (10), disposée entre la machine à piston (9), dont le volume aspiré est réglable en fonction d'un signal de freinage, et l'élément d'accumulation (11), est réalisée une zone d'étranglement (15) qui peut être réglée en fonction du signal de freinage, de telle sorte que son effet d'étranglement est ajusté de manière correspondante au signal de freinage.

2. Système d'entraînement selon la revendication 1, **caractérisé en ce que** le signal de freinage est proportionnel à une force appliquée sur la pédale de frein (20) ou à un déplacement de la pédale de frein.

3. Système d'entraînement selon la revendication 2, **caractérisé en ce qu'**en présence d'une augmentation de la force appliquée sur la pédale de frein ou d'une augmentation du déplacement de la pédale de frein, la machine à piston (9) hydrostatique peut être réglée dans le sens d'une augmentation du volume aspiré.

4. Système d'entraînement selon la revendication 3, **caractérisé en ce qu'**en présence du volume aspiré maximal et d'une force toujours plus grande appliquée sur la pédale de frein ou d'un déplacement toujours plus grand de la pédale de frein, la zone d'étranglement (15) peut être réglée dans le sens d'un ralentissement croissant.

5. Système d'entraînement selon l'une quelconque des revendications 1 à 4, **caractérisé en ce que** la zone d'étranglement (15) peut être réglée en fonction d'une pression qui règne dans l'élément d'accumulation (11).

6. Système d'entraînement selon la revendication 5, **caractérisé en ce que** l'augmentation du moment de freinage sous l'effet d'une augmentation de pression dans l'élément d'accumulation (11) peut être compensée par un réglage, agissant dans le sens opposé, de la zone d'étranglement (15) réglable.

7. Procédé d'accumulation de l'énergie cinétique par un système d'entraînement avec une machine à piston (9) hydrostatique, ayant un volume aspiré réglable en fonction d'un signal de freinage et reliée à un élément d'accumulation (11) via une conduite d'accumulation sous haute pression (10), et avec une zone d'étranglement (15) réglable en fonction du signal de freinage, comportant les étapes suivantes:
- détermination d'un moment de freinage demandé,
- réglage de la zone d'étranglement (15) réglable en fonction du moment de freinage demandé, de telle sorte que son effet d'étranglement est ajusté, de manière correspondante, au signal de freinage, et
- acheminement de fluides sous pression dans l'élément d'accumulation (11) par l'intermédiaire de la zone d'étranglement (15).

8. Procédé selon la revendication 7, **caractérisé en ce que**, tout d'abord, le volume aspiré de la machine à piston (9) hydrostatique est réglé en fonction du moment de freinage demandé.

9. Procédé selon la revendication 7 ou 8, **caractérisé en ce que** le volume aspiré de la machine à piston (9) hydrostatique est réglé proportionnellement au moment de freinage demandé.

10. Procédé selon l'une quelconque des revendications 7 à 9, **caractérisé en ce qu'**en présence d'un moment de freinage demandé croissant, la machine à piston (9) hydrostatique est réglée dans le sens de son volume aspiré maximal et une fois que le volume aspiré maximal est atteint et que le moment de freinage demandé continue à augmenter, la zone d'étranglement (15) réglable est réglée dans le sens d'un ralentissement plus fort.

11. Procédé selon l'une quelconque des revendications 7 à 10, **caractérisé en ce que** la zone d'étranglement (15) réglable est réglée dans le sens d'un ralentissement plus faible sous l'effet de l'augmentation de la pression régnant dans l'élément d'accumulation (11).

12. Procédé selon la revendication 11, **caractérisé en ce que** par le réglage de la zone d'étranglement (15) dans le sens d'un ralentissement plus faible sous l'effet de l'augmentation de la pression régnant dans l'élément d'accumulation (11), l'augmentation du moment de freinage, induite par l'augmentation de la pression dans l'élément d'accumulation (11), est justement compensée.
